# EUROPÄISCHE PATENTSCHRIFT

(11) **EP 0 614 018 B1**
(45) Veröffentlichungstag und Bekanntmachung des Hinweises auf die Patenterteilung: **29.07.1998**
(21) Anmeldenummer: 94101168.6
(22) Anmeldetag: 27.01.1994
(51) Int. Cl.: F16B 7/04, F16B 11/00, E06B 3/96, F16B 7/18

(54) **T-Verbindung zwischen zwei Profilen**
T connection between two profiles
Raccord en T entre deux profilés

(30) Priorität: 02.03.1993 DE 4306420
(43) Veröffentlichungstag der Anmeldung: 07.09.1994
(73) Patentinhaber: SCHÜCO International KG, 33609 Bielefeld (DE)
(72) Erfinder: Tönsmann, Armin, D-33818 Leopoldshöhe (DE); Habicht, Siegfried, D-33813 Leopoldshöhe (DE)
(74) Vertreter: Stracke, Alexander, Dipl.-Ing.

(56) Entgegenhaltungen:
- EP-A- 0 114 222
- DE-A- 3 823 941
- DE-A- 4 008 305
- GB-A- 2 159 198
- US-A- 3 816 011

## Beschreibung

Die Erfindung bezieht sich auf eine T-Verbindung zwischen einem Sprossen- und einem Rahmenprofil, wobei das Rahmenprofil auf seiner dem Sprossenprofil zugewandten Seite mindestens eine in Längsrichtung des Rahmenprofiles verlaufende Nut aufweist, in der ein in eine Hohlkammer des Sprossenprofils hineinragender T-Verbinder befestigt ist und auf deren oberen Nutkanten, die untere, dem Rahmenprofil zugewandte Stirnfläche des Sprossenprofils teilweise aufliegt und der Spalt außerhalb der Nut zwischen dem Boden des Rahmenprofils und der übrigen Stirnfläche des Sprossenprofils abgedichtet ist.

Es ist eine T-Verbindung dieser Art bekannt (GB-A-2 159 198), bei der der T-Verbinder einen in die Hohlkammer des Sprossenprofils eingreifenden Schaft und eine am Rahmenprofil festlegbare Grundplatte aufweist. Bei dem T-Verbinder handelt es sich um ein Formteil aus Kunststoff, so daß der Schaft und die Grundplatte einstückig ausgebildet sind. Der T-Verbinder stellt ein hartes Bauteil ohne elastische Bereiche dar.
Der T-Verbinder wird in den Falz des Rahmenprofiles eingesetzt und mittels Rastkanten vorfixiert. Die endgültige Festlegung kann mittels Schrauben erfolgen, die durch die Grundplatte hindurchgreifen und dann weiter in das Kunststoff rahmenprofil und in das darin befindliche Verstärkungsprofil aus Stahl eingeschraubt werden.
Die Grundplatte überragt nach außen den Schaft und bildet mit den Nuten des Rahmenprofils eine Ebene, auf der sich die Stirnfläche des Sprossenprofils abstützen kann.
Da der T-Verbinder keine elastischen Bereiche aufweist, wird hierdurch eine Abdichtung zwischen den Bauteilen nicht erreicht. Zur Abdichtung des Sprossenprofils nach dem Aufsetzen auf den T-Verbinder muß eine Dichtungsmasse verwendet werden.

Da der abzudichtende Spaltbereich unmittelbar in den Hohlkammerbereich des Sprossenprofiles übergeht, ist beim Einbringen von Dichtungsmasse ein unkontrolliertes Eindringen dieser Dichtungsmasse in den Hohlkammerbereich des Sprossenprofils möglich.

Der Erfindung liegt die Aufgabe zugrunde, die Abdichtung des Spaltbereiches zwischen dem Sprossenprofil und dem Rahmenprofil einer T-Verbindung der eingangs genannten Art zu vereinfachen und den Bedarf an Dichtungsmaterial zu reduzieren.

Diese Aufgabe wird erfindungsgemäß dadurch gelöst, daß zur Abdichtung des Spaltes mindestens ein als Formteil ausgebildetes Dichtkissen vorgesehen ist, welches aus einem elastischen Material hergestellt und im Stoßbereich am Rahmenprofil festgelegt ist und daß das Dichtkissen dicker ist als die Höhe des abzudichtenden Spaltes, so daß die unteren Kanten des Sprossenprofils in das Dichtkissen eingepreßt sind.

Durch die Verwendung eines entsprechend ausgebildeten Dichtkissens, welches vor der Herstellung der T-Verbindung am Rahmenprofil festgelegt wird, ergibt sich eine einfach zu realisierende Abdichtung, die vom Verarbeiter weder besonderes Geschick noch besondere Aufmerksamkeit erfordert, da lediglich dafür Sorge zu tragen ist, daß das Dichtkissen an derjenigen Stelle liegt, an der das Sprossenprofil auf das Rahmenprofil trifft. Außerdem ist das erforderliche Dichtungsmaterial durch die Gestaltung des Dichtkissens vorgegeben und auf das absolut erforderliche Mindestmaß begrenzt.

Weitere Ausgestaltungen der Erfindung sind Gegenstand der Unteransprüche.

In dem beigefügten Zeichnungen ist ein Ausführungsbeispiel der Erfindung dargestellt, welches im folgenden näher beschrieben wird.

Es zeigen:

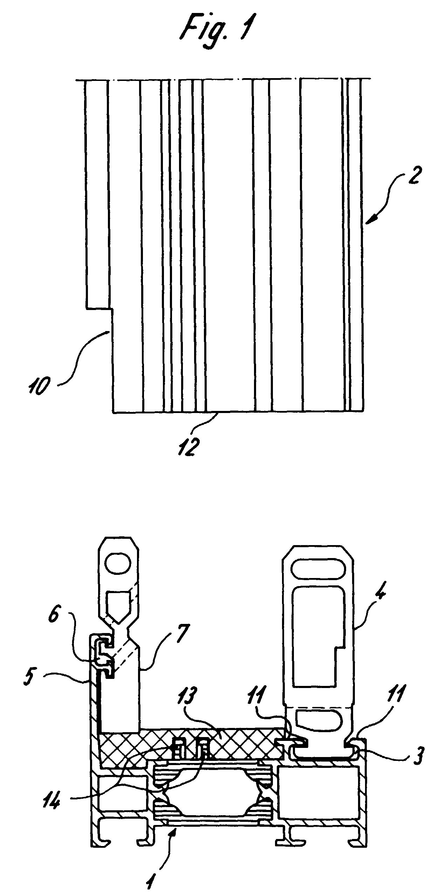

- Figur 1: einen Schnitt durch ein Rahmenprofil mit T-Verbindern und einer Ansicht eines mit dem Rahmenprofil nach Art einer T-Verbindung zu verbindenden Sprossenprofiles,
- Figur 2: eine perspektivische Darstellung des Rahmenprofiles mit T-Verbindern und des Sprossenprofiles nach Art eine Sprengbildes.

In den Zeichnungen ist mit dem Bezugszeichen 1 ein Rahmenprofil und mit dem Bezugzeichen 2 ein Sprossenprofil bezeichnet, die nach Art einer T-Verbindung miteinander verbunden werden sollen.

Das Rahmenprofil 1, welches im dargestellten Ausführungsbeispiel als wärmegedämmtes Profil ausgebildet ist, weist an seiner dem Sprossenprofil 2 zugewandten Seite eine Nut 3 auf, die in Längsrichtung des Rahmenprofiles 1 verläuft. In diese Nut 3 ist ein erster T-Verbinder 4 eingesetzt und befestigt. Weiterhin ist das Rahmenprofil 1 mit einem angepreßten Anschlag 5 versehen, der in seinem oberen Randbereich eine Längsnut 6 aufweist. In dieser Längsnut 6 ist ein weiterer T-Verbinder 7 angeordnet.

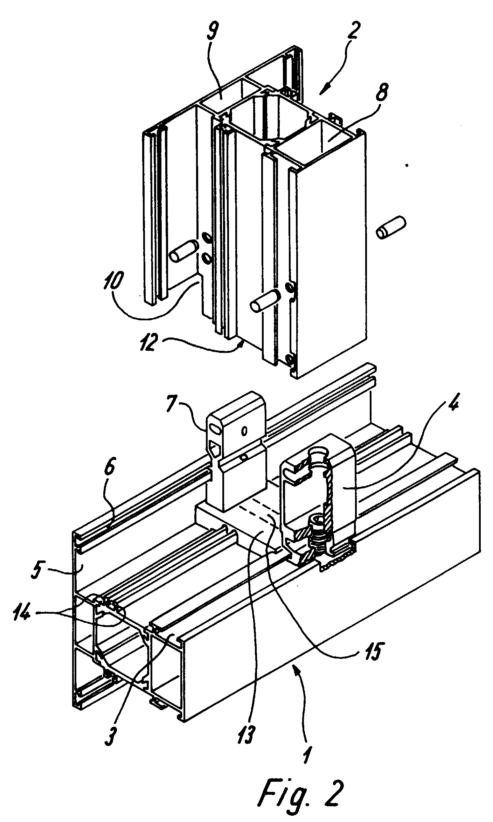

Das Sprossenprofil 2 ist, was Figur 2 besonders anschaulich zeigt, mit Hohlkammern 8 und 9 versehen, in welche nach Herstellung der T-Verbindung die beiden T-Verbinder 4 bzw. 7 eingreifen.

Das Sprossenprofil 2 ist weiterhin im Bereich des angepreßten Anschlages 5 des Rahmenprofiles 1 mit einer entsprechend gestalteten Ausklinkung 10 versehen.

Um den zwischen den oberen Nutkanten 11, auf denen die untere, dem Rahmenprofil 1 zugewandtliegende Stirnfläche 12 des Sprossenprofiles 2 aufliegt, und dem Nutboden verbleibenden Spalt abzudichten, ist am Rahmenprofil 1 ein Dichtkissen 13 vorgesehen, welches aus einem aus elastischem Material hergestellten Formteil besteht. Das Dichtkissen 13 ist im dargestellten Ausführungsbeispiel auf zur Sprossenseite hin vorstehenden Nutstegen 14 angeordnet und beispielsweise durch eine schmale Naht eines dauerelastischen Dichtmittels 15, auf dem Nutgrund des Rahmenprofiles 1 verbunden. Die Dicke des Dichtkissens 13 ist etwas größer als die Höhe des abzudichtenden Spaltes, so daß sowohl durch den T-Verbinder 7 wie auch durch die untere Stirnfläche 12 des Sprossenprofiles 2 das Dichtkissen 13 an dem Nutgrund des Rahmenprofiles 1 angepreßt und dadurch in seiner Lage fixiert wird.

Bei relativ schmalen Sprossenprofilen 2 kann, wie im dargestellten Ausführungsbeispiel gezeigt, ein den gesamten Stoßbereich überdeckendes Dichtkissen 13 verwendet werden. Bei verhältnismäßig breiten Sprossenprofilen kann aus Gründen der Materialersparnis je ein Dichtkissen 13 in den beiden - in Längsrichtung des Rahmenprofiles 1 gesehen - Randbereichen des Sprossenprofiles 2 verwendet werden.

In jedem Falle wird das Dichtkissen 13 so dimensioniert, daß es über die Randbereiche des Sprossenprofiles 2 geringfügig hinaus vorsteht.

Durch die Komprimierung des Dichtkissens 13 durch den T-Verbinder 7 und das Sprossenprofil 2 andererseits wird das Dichtkissen 13 in seiner Lage am Rahmenprofil 1 fixiert, zusätzlich wird das Dichtkissen durch das dauerelastische Dichtmittel 15 am Rahmenprofil 1 gehalten.

Das Dichtkissen 13 besteht vorzugsweise aus einem geschlossenzelligen Schaumstoff, so daß das Eindringen von Feuchtigkeit in den Vorkammerbereich des Sprossenprofiles 2 sicher verhindert ist.

## Patentansprüche

1. T-Verbindung zwischen einem Sprossen- (2) und einem Rahmenprofil (1), wobei das Rahmenprofil auf seiner dem Sprossenprofil (2) zugewandten Seite mindestens eine in Längsrichtung des Rahmenprofiles verlaufende Nut (3) aufweist, in der ein in eine Hohlkammer (8) des Sprossenprofiles (2) hineinragender T-Verbinder (4) befestigt ist und auf deren oberen Nutkanten (11), die untere, dem Rahmenprofil zugewandte Stirnfläche des Sprossenprofils teilweise aufliegt und der Spalt außerhalb der Nut (3) zwischen dem Boden des Rahmenprofils (1) und der übrigen Stirnfläche des Sprossenprofils (2) abgedichtet ist, dadurch gekennzeichnet, daß zur Abdichtung des Spaltes mindestens ein als Formteil ausgebildetes Dichtkissen (13) vorgesehen ist, welches aus einem elastischen Material hergestellt und im Stoßbereich am Rahmenprofil (1) festgelegt ist und daß das Dichtkissen (13) dicker ist als die Höhe des abzudichtenden Spaltes, so daß die unteren Kanten des Sprossenprofiles (2) in das Dichtkissen (13) eingepreßt sind.

2. T-Verbindung nach Anspruch 1, dadurch gekennzeichnet, daß das Dichtkissen (13) am Rahmenprofil (1) durch eine schmale Naht eines im Nutgrund des Rahmenprofils (1) aufgebrachten dauerelastischen Dichtmittels (15) festgelegt ist.

3. T-Verbindung nach Anspruch 1 oder 2, dadurch gekennzeichnet, daß das Rahmenprofil (1) in an sich bekannter Weise mit einem angepreßten Anschlag (5) ausgestattet ist, an dem ein T-Verbinder festgelegt ist, dessen unteres Ende in das Dichtkissen (13) eingepreßt ist.

4. T-Verbindung nach einem der Ansprüche 1 bis 3, dadurch gekennzeichnet, daß bei einem relativ breiten Sprossenprofil (2) in jedem - in Längsrichtung des Rahmenprofiles (1) gesehen - Randbereich ein separates Dichtkissen (13) vorgesehen ist.

5. T-Verbindung nach einem der Ansprüche 1 bis 4, dadurch gekennzeichnet, daß das Dichtkissen (13) aus einem geschlossenzelligen Schaumstoff besteht.

## Claims

1. A T-connection between a crossbar member (2) and a frame member (1), wherein on its side towards the crossbar member (2) the frame member has at least one groove (3) which extends in the longitudinal direction of the frame member and in which there is fixed a T-connector (4) projecting into a hollow chamber (8) in the crossbar member (2), the lower end face of the crossbar member which is towards the frame member partially bearing against the upper edges of the groove, and wherein the gap outside the groove (3) between the bottom of the frame member (1) and the rest of the end face of the crossbar member (2) is sealed off, characterised in that for the purposes of sealing off the gap there is provided at least one sealing pad (13) which is in the form of a shaped member and which is made from an elastic material and which is fixed in the joint region to the frame member (1) and that the sealing pad (13) is thicker than the height of the gap to be sealed off so that the lower edges of the crossbar member (2) are pressed into the sealing pad (13).

2. A T-connection according to claim 1 characterised in that the sealing pad (13) is fixed to the frame member (1) by a narrow seam of a permanently elastic sealing means (15) which is applied in the bottom of the groove in the frame member (1).

3. A T-connection according to claim 1 or claim 2 characterised in that the frame member (1) is provided in per se known manner with an abutment means (5) which is pressed thereagainst and to which there is fixed a T-connector whose lower end is pressed into the sealing pad (13).

4. A T-connection according to one of claims 1 to 3 characterised in that in the case of a relatively wide crossbar member (2) a separate sealing pad (13) is provided in each edge region as viewed in the longitudinal direction of the frame member (1).

5. A T-connection according to one of claims 1 to 4 characterised in that the sealing pad (13) comprises a closed-cell foam.

## Revendications

1. Liaison en T entre un profilé de meneau (2) et un profilé de châssis (1), le profilé de châssis présentant, sur sa face tournée vers le profilé de meneau (2), au moins une rainure (3) s'étendant dans la direction longitudinale du profilé de châssis, dans laquelle est fixé un raccord en T (4) s'engageant dans une chambre creuse (8) du profilé de meneau (2) et sur les arêtes supérieures (11) de laquelle repose en partie la face frontale du profilé de meneau, tournée vers le profilé de châssis, et la fente, située à l'extérieur de la rainure (3), entre le fond du profilé de châssis (1) et la face frontale restante du profilé de meneau (2), est rendue étanche, caractérisée en ce que pour l'étanchement de la fente il est prévu au moins un coussin d'étanchéité (13) conformé en pièce profilée, qui est réalisé dans un matériau élastique et qui est fixé sur le profilé de châssis, dans la région du joint et en ce que le coussin d'étanchéité (13) est plus épais que la hauteur de la fente à rendre étanche, de sorte que les arêtes inférieures du profilé de meneau (2) sont pressées dans le coussin d'étanchéité (13).

2. Liaison en T selon la revendication 1, caractérisée en ce que le coussin d'étanchéité (13) est fixé sur le profilé de châssis (1), par un étroit cordon d'un produit d'étanchéité (15) élastique permanent, appliqué dans le fond de la rainure du profilé de châssis (1).

3. Liaison en T selon la revendication 1 ou 2, caractérisé en ce que le profilé de châssis (1) est équipé, de manière connue en soi, d'une butée (5) serrée, sur laquelle est fixé un raccord en T, dont l'extrémité inférieure est pressée dans le coussin d'étanchéité (13).

4. Liaison en T selon l'une des revendications 1 à 3, caractérisé en ce que, dans le cas d'un profilé de meneau (2) relativement large, il est prévu un coussin d'étanchéité (13) séparé, dans chaque zone de bordure, vue dans la direction longitudinale du profilé de châssis (1).

5. Liaison en T selon l'une des revendications 1 à 4, caractérisée en ce que le coussin d'étanchéité (13) est fait d'une mousse à cellules fermées.
